# EUROPEAN PATENT APPLICATION

(11) **EP 3 661 288 A1**
(43) Date of publication of application: **03.06.2020**
(21) Application number: 17930816.8
(22) Date of filing: 30.10.2017
(51) Int. Cl.: H04W 72/04

(54) **UPLINK CONTROL CHANNEL TRANSMISSION METHOD, TERMINAL AND BASE STATION**

(71) Applicant: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan Guangdong 523860 (CN)
(74) Representative: Penza, Giancarlo
(86) International application number: PCT/CN2017/108422
(87) International publication number: WO 2019/084735

(57) **Abstract**

The present application relates to wireless communication technology, and discloses an uplink control channel transmission method, a terminal, and a base station, for solving the problem of uplink scheduling request transmission latency being unable to meet latency sensitivity service requirements. In the present invention, a terminal determines a period and physical resources for sending an uplink scheduling request; the terminal determines a target uplink control channel for transmitting other uplink control information; and, on the basis of the relationship between the period and the duration of the target uplink control channel transmission, the terminal determines a multiplexing transmission mode of the uplink scheduling request and the other uplink control information.

## Description

### Technical Field

The present application relates to a wireless communication technology, in particular to a technology for uplink control channel transmission.

### Background

The current 5G NR (new radio) system supports physical uplink control channels PUCCH of two time lengths, that is, a short-PUCCH and a long-PUCCH. The short-PUCCH includes 1 or 2 time domain symbols, and the long-PUCCH includes 4-14 time domain symbols. Uplink control channel Parameters (e.g., period, offset, PUCCH resources, etc.) for transmitting an uplink scheduling request (SR) are usually semi-statically configured. The scheduling request adopts an on-off transmission mechanism, that is, a PUCCH is transmitted on a corresponding resource when a terminal has a scheduling request, and no information is sent on the corresponding resource when the terminal has no scheduling request. For the transmission of a scheduling request (SR), it is concluded that a transmission period of an SR is at least equal to X OFDM symbols (at least for the SR transmitted by using a short-PUCCH), and the value of X is assumed as 1 in the current operation.

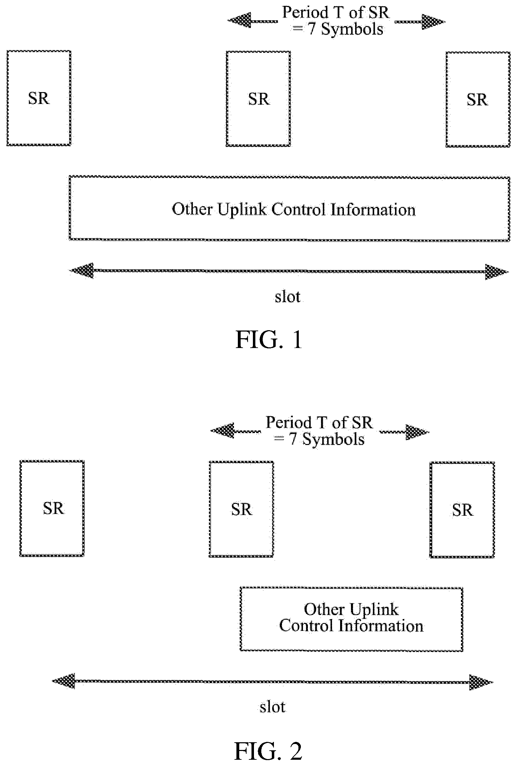

When a period of the SR is very short, there will be multiple transmission resources of the SR in one slot (including 14 symbols). When other uplink control information transmitted by using a long-PUCCH is transmitted in the slot at the same time, since there are multiple transmission resources of the SR in the time domain, the base station cannot rely on scheduling to avoid SR collisions in other uplink control information domains, and the following situations may occur:
1. The transmission duration of the other uplink control information by using the PUCCH is greater than the transmission duration of the SR by using a short-PUCCH(as shown in FIG. 1).
2. The two channels partially overlap in the time domain (as shown in FIG. 2).

In this case, if information of the SR is embedded into a channel, which is for transmitting the other uplink control information, for transmitting, the transmission delay of the SR will be increased, which is unacceptable for delay-sensitive services. Therefore, there is no clear solution for how a terminal that cannot support simultaneous transmission of multiple uplink control channels operates in this case.

### Summary

The purpose of the present application is to provide an uplink control channel transmission method, a terminal, and a base station, so as to solve the problem that SR transmission delay may increase and requirements of delay-sensitive services cannot be satisfied.

In order to solve the above problem, the present application discloses an uplink control channel transmission method, including: determining, by a terminal, a period and a physical resource for transmitting an uplink scheduling request; determining, by the terminal, to use a target uplink control channel for transmitting other uplink control information; and determining, by the terminal, a multiplexing transmission mode of the uplink scheduling request and the other uplink control information according to a relationship between the period and a transmission duration of the target uplink control channel.

In a preferred embodiment, determining, by the terminal, the multiplexing transmission mode of the uplink scheduling request and the other uplink control information according to the relationship between the period and the transmission duration of the target uplink control channel includes: determining, by the terminal, that a first preset relationship between the period and the transmission duration of the target uplink control channel is satisfied; and determining, by the terminal, that the uplink scheduling request and the other uplink control information are transmitted by multiplexing through the target uplink control channel.

In a preferred embodiment, determining, by the terminal, that the uplink scheduling request and the other uplink control information are transmitted by multiplexing through the target uplink control channel includes: after the uplink scheduling request and the other uplink control information are processed, mapping the processed uplink scheduling request and the other uplink control information into the target uplink control channel for transmission, wherein the processing includes at least one of the following: concatenation; joint coding; interleaving; and modulation.

In a preferred embodiment, the first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

In a preferred embodiment, determining, by the terminal, the multiplexing transmission mode of the uplink scheduling request and the other uplink control information according to the relationship between the period and the transmission duration of the target uplink control channel includes: determining, by the terminal, that a second preset relationship between the period and the transmission duration of the target uplink control channel is satisfied; and determining, by the terminal, to use a first set of time symbols in the target uplink control channel for transmitting the other uplink control information.

In a preferred embodiment, the terminal transmits the uplink scheduling request on the physical resource, and the first set of time domain symbols are time domain symbols other than time domain symbols used for actually transmitting the uplink scheduling request in all time domain symbols in the target uplink control channel.

In a preferred embodiment, the terminal transmits the uplink scheduling request on the physical resource, and the first set of time domain symbols are time domain symbols other than time domain symbols overlapping with the physical resource in all time domain symbols in the target uplink control channel.

In a preferred embodiment, the terminal transmits the uplink scheduling request on a second set of time symbols in a frequency domain resource where the target uplink control channel is located, and the second set of time symbols are the same as time symbols occupied by the physical resource.

In a preferred embodiment, the first set of time domain symbols are time domain symbols other than the second set of time symbols in all time domain symbols in the target uplink control channel.

In a preferred embodiment, the first set of time domain symbols are time domain symbols other than time domain symbols overlapping with the physical resource in all time domain symbols in the target uplink control channel.

In a preferred embodiment, the second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

In a preferred embodiment, the other uplink control information is mapped to the first set of time symbols for transmission after a number matching is performed according to the number of the first set of time symbols; or the other uplink control information is mapped to the first set of time symbols for transmission by puncturing.

The present application also discloses an uplink control channel transmission method, including: determining, by a base station, a period and a physical resource for receiving an uplink scheduling request; determining, by the base station, to use a target uplink control channel for receiving other uplink control information; and determining, by the base station, a multiplexing transmission mode of the uplink scheduling request and the other uplink control information according to a relationship between the period and a transmission duration of the target uplink control channel.

In a preferred embodiment, determining, by the base station, the multiplexing transmission mode of the uplink scheduling request and the other uplink control information according to the relationship between the period and the transmission duration of the target uplink control channel includes: determining, by the base station, that a first preset relationship between the period and the transmission duration of the target uplink control channel is satisfied; and determining, by the base station, that the uplink scheduling request and the other uplink control information are transmitted by multiplexing through the target uplink control channel.

In a preferred embodiment, determining, by the base station, that the uplink scheduling request and the other uplink control information are transmitted by multiplexing through the target uplink control channel includes: performing a processing on a signal received from the target uplink control channel, wherein the processing includes one of the following: de-concatenation, joint decoding, de-interleaving, and demodulation.

In a preferred embodiment, the first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

In a preferred embodiment, determining, by the base station, the multiplexing transmission mode of the uplink scheduling request and the other uplink control information according to the relationship between the period and the transmission duration of the target uplink control channel includes: determining, by the base station, that a second preset relationship between the period and the transmission duration of the target uplink control channel is satisfied; and determining, by the base station, to use a first set of time symbols in the target uplink control channel for receiving the other uplink control information.

In a preferred embodiment, the base station receives the uplink scheduling request on the physical resource, and the first set of time domain symbols are time domain symbols other than time domain symbols used for actually transmitting the uplink scheduling request in all time domain symbols in the target uplink control channel.

In a preferred embodiment, the base station receives the uplink scheduling request on the physical resource, and the first set of time domain symbols are time domain symbols other than time domain symbols overlapping with the physical resource in all time domain symbols in the target uplink control channel.

In a preferred embodiment, the base station receives the uplink scheduling request on a second set of time symbols in a frequency domain resource where the target uplink control channel is located, and the second set of time symbols are the same as time symbols occupied by the physical resource.

In a preferred embodiment, the first set of time domain symbols are time domain symbols other than the second set of time symbols in all time domain symbols in the target uplink control channel, or the first set of time domain symbols are time domain symbols other than time domain symbols overlapping with the physical resource in all time domain symbols in the target uplink control channel.

In a preferred embodiment, the second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

In a preferred embodiment, the other uplink control information is mapped to the first set of time symbols for transmission after a number matching is performed according to the number of the first set of time symbols; or the other uplink control information is mapped to the first set of time symbols for transmission by puncturing.

The present application also discloses a terminal, which includes: a first module, a second module, and a third module.

The first module is configured to determine a period and a physical resource for transmitting an uplink scheduling request.

The second module is configured to determine to use a target uplink control channel for transmitting other uplink control information.

The third module is configured to determine a multiplexing transmission mode of the uplink scheduling request and the other uplink control information according to a relationship between the period and a transmission duration of the target uplink control channel.

In a preferred embodiment, the third module includes: a first sub-module and a second sub-module.

The first sub-module is configured to determine that a first preset relationship between the period and the transmission duration of the target uplink control channel is satisfied.

The second sub-module is configured to determine that the uplink scheduling request and the other uplink control information are transmitted by multiplexing through the target uplink control channel.

The first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

In a preferred embodiment, the third module includes: a third sub-module and a fourth sub-module.

The third sub-module is configured to determine that a second preset relationship between the period and the transmission duration of the target uplink control channel is satisfied.

The fourth sub-module is configured to determine to use a first set of time symbols in the target uplink control channel for transmitting the other uplink control information.

The second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

In a preferred embodiment, the terminal transmits the uplink scheduling request on the physical resource. The first set of time domain symbols are time domain symbols other than time domain symbols used for actually transmitting the uplink scheduling request in all time domain symbols in the target uplink control channel.

Alternatively, the terminal transmits the uplink scheduling request on the physical resource. The first set of time domain symbols are time domain symbols other than time domain symbols overlapping with the physical resource in all time domain symbols in the target uplink control channel.

Alternatively, the terminal transmits the uplink scheduling request on a second set of time symbols in a frequency domain resource where the target uplink control channel is located, and the second set of time symbols are the same as time symbols occupied by the physical resource.

The present application also discloses a base station, which includes: a fourth module, a fifth module, and a sixth module.

The fourth module is configured to determine a period and a physical resource for receiving an uplink scheduling request.

The fifth module is configured to determine to use a target uplink control channel for receiving other uplink control information.

The sixth module is configured to determine a multiplexing transmission mode of the uplink scheduling request and the other uplink control information according to a relationship between the period and a transmission duration of the target uplink control channel.

In a preferred embodiment, the sixth module includes: a fifth sub-module and sixth sub-module.

The fifth sub-module is configured to determine that a first preset relationship between the period and the transmission duration of the target uplink control channel is satisfied.

The sixth sub-module is configured to determine that the uplink scheduling request and the other uplink control information are transmitted by multiplexing through the target uplink control channel.

The first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

In a preferred embodiment, the sixth module includes: a seventh sub-module and an eighth sub-module.

The seventh sub-module is configured to determine that a second preset relationship between the period and the transmission duration of the target uplink control channel is satisfied.

The eighth sub-module is configured to determine to use a first set of time symbols in the target uplink control channel for receiving the other uplink control information.

The second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

In a preferred embodiment, the base station receives the uplink scheduling request on the physical resource, and the first set of time domain symbols are time domain symbols other than time domain symbols used for actually transmitting the uplink scheduling request in all time domain symbols in the target uplink control channel.

Alternatively, the base station receives the uplink scheduling request on the physical resource, and the first set of time domain symbols are time domain symbols other than time domain symbols overlapping with the physical resource in all time domain symbols in the target uplink control channel.

Alternatively, the base station receives the uplink scheduling request on a second set of time symbols in a frequency domain resource where the target uplink control channel is located, and the second set of time symbols are the same as time symbols occupied by the physical resource.

Compared with the prior art, with an embodiment of the present application, an SR transmission delay of a delay-sensitive service may not be increased for a terminal which does not support simultaneous transmission of multiple uplink control channels.

A large number of technical features are recorded in the specification of the application and distributed in various technical solutions. If all possible combinations of technical features (i.e. technical solutions) of the present application are listed, the specification will be too lengthy. In order to avoid this problem, various technical features disclosed in the above summary of the present application, various technical features disclosed in the following embodiments and examples, and various technical features disclosed in the drawings can be combined freely with each other to form various new technical solutions (all of which are deemed to have been recorded in this specification), unless such combination of technical features is not technically feasible. For example, the feature A+B+C is disclosed in one example, the feature A+B+D+E is disclosed in another example. The features C and D are equivalent technical means that play the same role, technically, it is only needed to choose one of the features C and D, and they cannot be used at the same time, and the feature E can be technically combined with the feature C. Then, the solution of A+B+C+D should not be considered as already being recorded because of the technical infeasibility, while the solution of A+B+C+E should be considered as already being recorded.

### Brief Description of Drawings

FIG. 1 is a schematic diagram of the prior art where the transmission duration of other uplink control information by using a PUCCH is greater than the transmission duration of an SR by using a short-PUCCH.
FIG. 2 is a schematic diagram of a partial overlap of an SR transmission channel and other uplink control information transmission channel in a time domain in the prior art.
FIG. 3 is a schematic flowchart of an uplink control channel transmission method at a terminal side in a first embodiment of the present invention.
FIG. 4 is a schematic flowchart of an uplink control channel transmission method at a base station side in a second embodiment of the present invention.
FIG. 5 is a schematic diagram of a time-frequency resource used for uplink control channel transmission in an embodiment of the present invention (Method A).
FIG. 6 is a schematic diagram of a time-frequency resource used for uplink control channel transmission in an embodiment of the present invention (Method B).
FIG. 7 is a schematic diagram of a time-frequency resource used for uplink control channel transmission in an embodiment of the present invention (Method C).
FIG. 8 is a schematic diagram of a time-frequency resource used for uplink control channel transmission in an embodiment of the present invention (Method D).
FIG. 9 is a schematic diagram of an SR transmission method in an embodiment of the present invention.

### Detailed Description

In the following description, many technical details are set forth so as to enable the reader to better understand the present application. However, those of ordinary skill in the art can understand that the technical solution claimed in the present application can be realized even without these technical details and based on various changes and modifications of the following embodiments.

Description of some concepts and abbreviations in the present application is as follows:
5G: 5th Generation Mobile Communication Technology;
NR: an abbreviation for New Radio, which is a wireless access part of 5G (5th Generation Mobile Communication Technology);
PUCCH: an abbreviation for Physical Uplink Control Channel;
SR:Uplink Scheduling Request, an abbreviation of Scheduling Request;
OFDM: an abbreviation for Orthogonal Frequency Division Multiplexing;
T: a period for transmitting an uplink scheduling request;
P: a transmission duration of a target uplink control channel.

In order to make the object, technical solution and advantages of the present application clearer, embodiments of the present application will be described in further detail below with reference to the accompanying drawings.

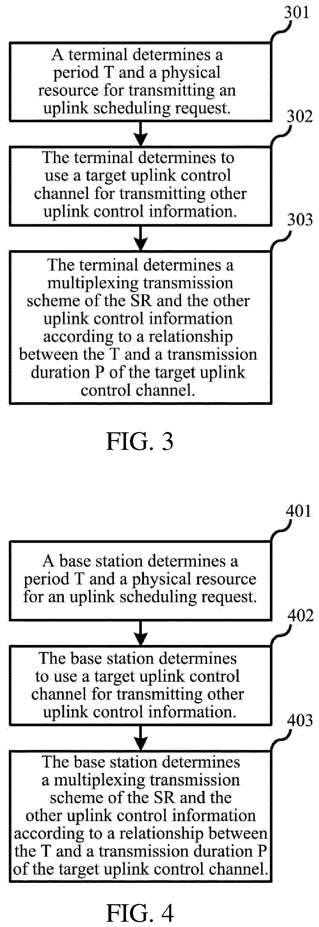

A first embodiment of the present invention relates to an uplink control channel transmission method. FIG. 3 is a schematic flowchart of the uplink control channel transmission method.

In act 301, a terminal determines a period T and a physical resource for transmitting an uplink scheduling request.

In act 302, the terminal determines to use a target uplink control channel for transmitting other uplink control information.

In act 303, the terminal determines a multiplexing transmission mode of the SR and the other uplink control information according to a relationship between the T and a transmission duration P of the target uplink control channel.

By the above technical solution, an SR transmission delay of a delay-sensitive service may not be increased for a terminal which does not support simultaneous transmission of multiple uplink control channels.

The above acts 301 and 302 may be executed in a interchanged order or parallel order.

Optionally, Act 303 may further include the following sub-acts: determining, by the terminal, that a first preset relationship between the T and the P is satisfied; and determining, by the terminal, that the SR and the other uplink control information are transmitted by multiplexing through the target uplink control channel. Optionally, after the SR and the other uplink control information are processed, the processed SR and the other uplink control information are mapped into the target uplink control channel for transmission. The processing includes, but not limited to, concatenation, joint coding, interleaving, modulation and so on.

The first preset relationship has multiple implementation modes. Optionally, the first preset relationship includes: the P is less than or equal to K^{∗}T where K > 0, and/or a size of a frequency domain resource of the target uplink control channel is less than a size of a frequency domain resource corresponding to the physical resource. Preferably, K = 1.

Optionally, the act 303 may further include the following sub-acts: determining, by the terminal, that a second preset relationship between the T and the P is satisfied; and determining, by the terminal, to use a first set of time symbols in the target uplink control channel for transmitting the other uplink control information.

When the second preset relationship is satisfied, there are various solutions for transmitting the SR and the other uplink control information. Here are the examples.

Solution A: The terminal transmits the SR on the physical resource. The first set of time domain symbols are time domain symbols other than time domain symbols used for actually transmitting the SR in all time domain symbols in the target uplink control channel.

Solution B: The terminal transmits the SR on the physical resource. The first set of time domain symbols are time domain symbols other than time domain symbols overlapping with the physical resource in all time domain symbols in the target uplink control channel.

Solution C: The terminal transmits the SR on a second set of time symbols in a frequency domain resource where the target uplink control channel is located. The first set of time domain symbols are time domain symbols other than the second set of time symbols in all time domain symbols in the target uplink control channel.

Solution D: The terminal transmits the SR on a second set of time symbols in a frequency domain resource where the target uplink control channel is located. The first set of time domain symbols are time domain symbols other than time domain symbols overlapping with the physical resource in all time domain symbols in the target uplink control channel.

The second preset relationship has multiple implementation modes. Optionally, the second preset relationship includes: the P is greater than S^{∗}T where S > 0, and/or a size of a frequency domain resource of the target uplink control channel is greater than or equal to a size of a frequency domain resource corresponding to the physical resource. Preferably, S = 1. Optionally, S = K.

There are many ways to transmit other uplink control information. Optionally, the other uplink control information is mapped to the first set of time symbols for transmission after a number matching is performed according to the number of the first set of time symbols. Optionally, the other uplink control information is mapped to the first set of time symbols for transmission by puncturing.

A second embodiment of the present invention relates to an uplink control channel transmission method. The first embodiment is the processing at a terminal side, and the second embodiment is the processing at a base station side corresponding to the first embodiment. FIG. 4 is a schematic flowchart of the uplink control channel transmission method.

In act 401, a base station determines a period T and a physical resource for an uplink scheduling request.

In act 402, the base station determines to use a target uplink control channel for transmitting other uplink control information.

In act 403, the base station determines a multiplexing transmission mode of the SR and the other uplink control information according to a relationship between the T and a transmission duration P of the target uplink control channel.

By the above technical solution, an SR transmission delay of a delay-sensitive service may not be increased for a base station which does not support simultaneous reception of multiple uplink control channels.

The above acts 401 and 402 may be executed in an interchanged order or parallel order.

Optionally, the act 403 may further include the following sub-acts: determining, by the base station, that a first preset relationship between the T and the P is satisfied; and determining, by the base station, that the SR and the other uplink control information are transmitted by multiplexing through the target uplink control channel. Optionally, the base station performs processing on a signal received from the target uplink control channel. The processing includes, but not limited to, de-concatenation, joint decoding, de-interleaving, demodulation and so on.

The first preset relationship has multiple implementation modes. Optionally, the first preset relationship includes: the P is less than or equal to K^{∗}T where K > 0, and/or a size of a frequency domain resource of the target uplink control channel is less than a size of a frequency domain resource corresponding to the physical resource. Preferably, K = 1.

Optionally, the act 403 may further include the following sub-acts: determining, by the base station, that a second preset relationship between the T and the P is satisfied; and determining, by the base station, to use a first set of time symbols in the target uplink control channel for receiving the other uplink control information.

When the second preset relationship is satisfied, there are various solutions for transmitting the SR and the other uplink control information. Here are the examples:
Solution A: The base station receives the SR on the physical resource. The first set of time domain symbols are time domain symbols other than time domain symbols used for actually receiving the SR in all time domain symbols in the target uplink control channel.
Solution B: The base station receives the SR on the physical resource. The first set of time domain symbols are time domain symbols other than time domain symbols overlapping with the physical resource in all time domain symbols in the target uplink control channel.
Solution C: The base station receives the SR on a second set of time symbols in a frequency domain resource where the target uplink control channel is located. The first set of time domain symbols are time domain symbols other than the second set of time symbols in all time domain symbols in the target uplink control channel.
Solution D: The base station receives the SR on a second set of time symbols in a frequency domain resource where the target uplink control channel is located. The first set of time domain symbols are time domain symbols other than time domain symbols overlapping with the physical resource in all time domain symbols in the target uplink control channel.

The second preset relationship has multiple implementation modes. Optionally, the second preset relationship includes: the P is greater than S^{∗}T where S > 0, and/or a size of a frequency domain resource of the target uplink control channel is greater than or equal to a size of a frequency domain resource corresponding to the physical resource. Preferably, S = 1. Optionally, S = K.

A third embodiment of the present invention relates to a terminal. The terminal includes: a first module, a second module, and a third module.

The first module is configured to determine a period and a physical resource for transmitting an uplink scheduling request.

The second module is configured to determine to use a target uplink control channel for transmitting other uplink control information.

The third module is configured to determine a multiplexing transmission mode of the uplink scheduling request and the other uplink control information according to a relationship between the period and a duration of the target uplink control channel.

Specifically, the third module includes: a first sub-module and a second sub-module.

The first sub-module is configured to determine that a first preset relationship between the period and the transmission duration of the target uplink control channel is satisfied.

The second sub-module is configured to determine that the uplink scheduling request and the other uplink control information are transmitted by multiplexing through the target uplink control channel.

The first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

The third module includes: a third sub-module and a fourth sub-module.

The third sub-module is configured to determine that a second preset relationship between the period and the transmission duration of the target uplink control channel is satisfied.

The fourth sub-module is configured to determine to use a first set of time symbols in the target uplink control channel for transmitting the other uplink control information.

The second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

The terminal transmits the uplink scheduling request on the physical resource. The first set of time domain symbols are time domain symbols other than time domain symbols used for actually transmitting the uplink scheduling request in all time domain symbols in the target uplink control channel.

Alternatively, the terminal transmits the uplink scheduling request on the physical resource. The first set of time domain symbols are time domain symbols other than time domain symbols overlapping with the physical resource in all time domain symbols in the target uplink control channel.

Alternatively, the terminal transmits the uplink scheduling request on a second set of time symbols in a frequency domain resource where the target uplink control channel is located, and the second set of time symbols are the same as time symbols occupied by the physical resource.

The first embodiment is a method embodiment corresponding to the present embodiment, and the present embodiment can be implemented in cooperation with the first embodiment. The relevant technical details mentioned in the first embodiment are still valid in the present embodiment, and will not be repeated here to reduce repetition. Accordingly, the relevant technical details mentioned in the present embodiment can also be applied in the first embodiment.

A fourth embodiment of the present invention relates to a base station. The base station includes: a fourth module, a fifth module, and a sixth module.

The fourth module is configured to determine a period and a physical resource for receiving an uplink scheduling request.

The fifth module is configured to determine to use a target uplink control channel for receiving other uplink control information.

The sixth module is configured to determine a multiplexing transmission mode of the uplink scheduling request and the other uplink control information according to a relationship between the period and a duration of the target uplink control channel.

Specifically, the sixth module includes: a fifth sub-module and a sixth sub-module.

The fifth sub-module is configured to determine that a first preset relationship between the period and the transmission duration of the target uplink control channel is satisfied.

The sixth sub-module is configured to determine that the uplink scheduling request and the other uplink control information are transmitted by multiplexing through the target uplink control channel.

The first preset relationship includes: the transmission duration of the target uplink control channel is less than or equal to a product of K and the period of the uplink scheduling request, wherein K > 0; and/or a size of a frequency domain resource of the target uplink control channel is less than a size of a frequency domain resource corresponding to the physical resource.

The sixth module includes: a seventh sub-module and an eighth sub-module.

The seventh sub-module is configured to determine that a second preset relationship between the period and the transmission duration of the target uplink control channel is satisfied.

The eighth sub-module is configured to determine to use a first set of time symbols in the target uplink control channel for receiving the other uplink control information.

The second preset relationship includes: the transmission duration of the target uplink control channel is greater than a product of S and the period of the uplink scheduling request, wherein S > 0; and/or a size of a frequency domain resource of the target uplink control channel is greater than or equal to a size of a frequency domain resource corresponding to the physical resource.

The base station receives the uplink scheduling request on the physical resource, and the first set of time domain symbols are time domain symbols other than time domain symbols used for actually transmitting the uplink scheduling request in all time domain symbols in the target uplink control channel.

Alternatively, the base station receives the uplink scheduling request on the physical resource, and the first set of time domain symbols are time domain symbols other than time domain symbols overlapping with the physical resource in all time domain symbols in the target uplink control channel.

Alternatively, the base station receives the uplink scheduling request on a second set of time symbols in a frequency domain resource where the target uplink control channel is located, and the second set of time symbols are the same as time symbols occupied by the physical resource.

The second embodiment is a method embodiment corresponding to the present embodiment, and the present embodiment can be implemented in cooperation with the second embodiment. The relevant technical details mentioned in the second embodiment are still valid in the present embodiment, and will not be repeated here to reduce repetition. Accordingly, the relevant technical details mentioned in the present embodiment can also be applied in the second embodiment.

In order to explain the technical solution of the present invention more clearly, the following provides a typical example.

The terminal judges whether the T and P satisfy the first preset relationship.

If the first preset relationship is satisfied, the terminal simultaneously transmits the SR and other uplink control information in the target uplink control channel. For example, the P is less than or equal to K^{∗}T, where K>0, and K is a constant or configured by a base station, preferably, K=1. Preferably, the SR and the other uplink control information are joint coded and then mapped into the target uplink control channel for transmission.

If the first preset relationship is not satisfied, the terminal transmits the other uplink control information by using the first set of time domain symbols in the target uplink control channel. Specifically, there are four methods of transmission.

### Method A:

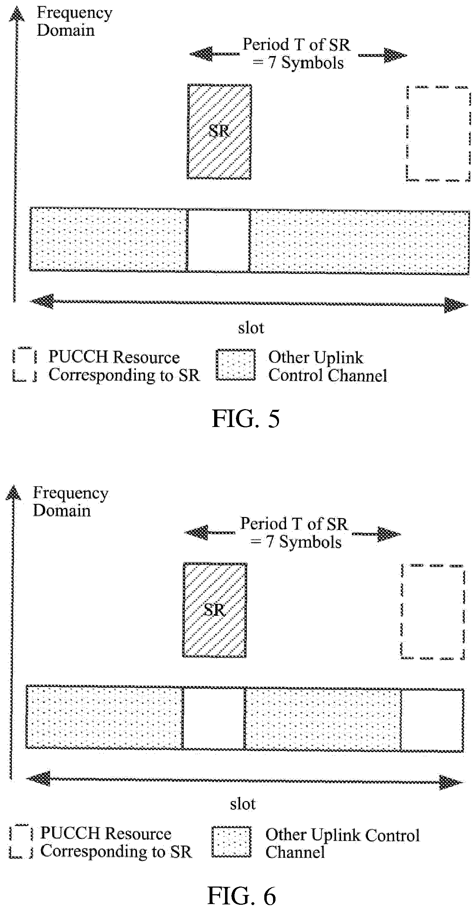

Acts on a terminal side: The terminal transmits the SR on the frequency domain resource corresponding to the SR. The first set of time domain symbols are time domain symbols other than time domain symbols used for actually transmitting the SR in all time domain symbols in the target uplink control channel, as shown in FIG. 5.

Acts on a base station side: The base station first detects whether there is the SR on the resource corresponding to the SR. If there is the SR, the target uplink control channel is not received on the corresponding time domain symbols. If there is no SR, the target uplink control channel is received on the corresponding time domain symbols.

### Method B:

Acts on a terminal side: The terminal transmits the SR on the frequency domain resource corresponding to the SR. The first set of time domain symbols are time domain symbols other than a time domain resource of the SR in all time domain symbols in the target uplink control channel, as shown in FIG. 6.

Acts on a base station side: The base station does not receive the first uplink control channel on the time domain symbols corresponding to the SR.

### Method C:

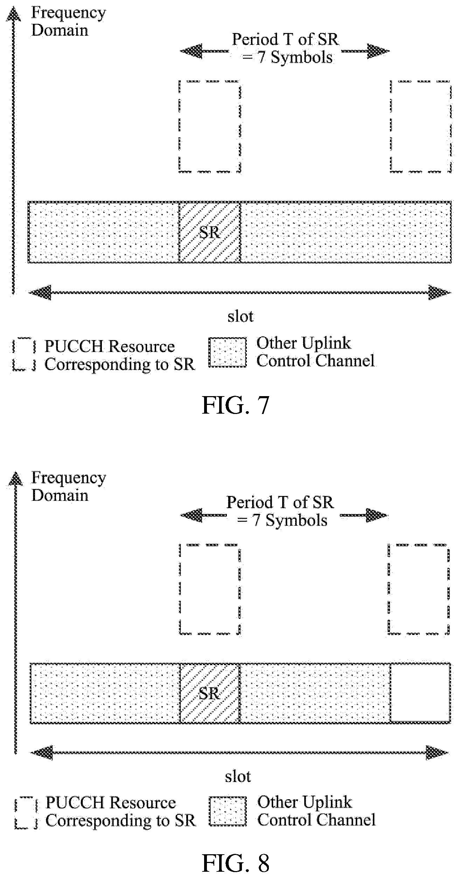

Acts on a terminal side: The terminal transmits the SR on a frequency domain resource where the target uplink control channel is located. The first set of time domain symbols are time domain symbols other than a time domain resource used for actually transmitting the SR in all time domain symbols in the target uplink control channel, as shown in FIG. 7.

Acts on a base station side: The base station first detects whether there is the SR on a resource where the target uplink control channel is located. If there is the SR, the target uplink control channel is not received on the corresponding time domain symbols. If there is no SR, the target uplink control channel is received on the corresponding time domain symbols.

### Method D:

Acts on a terminal side: The terminal transmits the SR on a frequency domain resource where the target uplink control channel is located. The first set of time domain symbols are time domain symbols other than a time domain resource of the SR in all time domain symbols in the target uplink control channel, as shown in FIG. 8.

Acts on a base station side: The base station does not receive the first uplink control channel on the time domain symbols corresponding to the SR.

In a preferred embodiment, the terminal judges whether a size of the frequency domain resource of the target uplink control channel is not less than a size of the frequency domain resource corresponding to the SR. If yes, the method C or method D is used, otherwise the method A or method B is used.

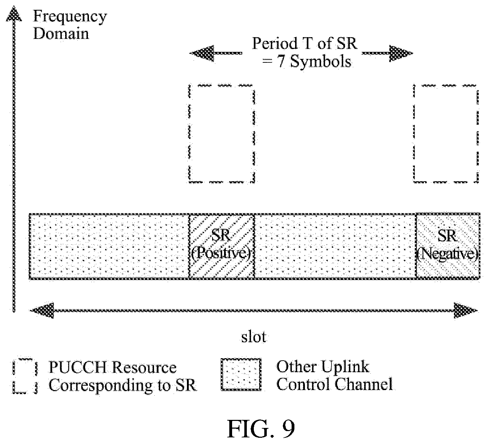

There are two transmission methods for the SR: one is of an on-off manner (applicable to the methods A, B, C and D), and the other is of a sequence selection manner (applicable only to the method D), as shown in FIG. 9.

In the on-off manner, when the SR is positive, the terminal uses a preset sequence for transmission, and when the SR is negative, the terminal does not transmit any information. Corresponding acts on a base station side are: the base station first detects whether there is the SR on the resource corresponding to the SR. If there is the SR, the first uplink control channel is not received on the corresponding time domain symbols. If there is no SR, the first uplink control channel is received on the corresponding time domain symbols.

In the sequence selection manner (applicable only to the method D), when the SR is positive, the terminal transmits a first preset sequence, and when the SR is negative, the terminal transmits a second preset sequence. Corresponding acts on a base station side are: the base station does not receive the first uplink control channel on the time domain symbols corresponding to the SR.

The method embodiments of the present invention may all be realized by software, hardware, and firmware, etc. No matter whether the present invention is realized by software, or hardware, or firmware, the instruction codes can be stored in any type of computer accessible memory (such as permanent or modifiable, volatile or non-volatile, solid-state or non solid-state, fixed or replaceable medium, etc.). Similarly, the memory may be, for example, a programmable array logic (PAL), a random access memory (RAM), a programmable read only memory (PROM), a read-only memory (ROM), an electrically erasable programmable ROM (EEPROM), a floppy disc, an optical disc, a digital versatile disc (DVD), or the like.

It should be noted that units disclosed in each device embodiment of the present invention are logical units. Physically, a logic unit may be a physical unit, or may be part of a physical unit, or may be implemented in combination with several physical units. Physical implementation modes for these logic units themselves are not the most important, the combination of the functions achieved by these logic units is the key to solving the technical problem disclosed in the present invention. Furthermore, in order to highlight an innovative part of the present invention, the above device embodiments of the present invention do not introduce the units which are not related closely to solving the technical problem disclosed in the present invention, and this does not indicate that the above device embodiments do not include other units.

It should be noted that in the application document of the present invention, relationship terms, such as first, second, are just used for distinguishing one entity or operation from another entity or operation, instead of requiring or indicating any practical relation or sequence existing between these entities or operations. Moreover, the term "include", "comprise" or any other variant intends to cover a non-exclusive inclusion, thus a process, a method, an object or a device including a series of elements includes not only those elements, but also other elements not listed explicitly, or includes inherent elements of the process, method, object or device. In a case that there are no more restrictions, an element limited by the statement "includes a" does not exclude the case that the process, the method, the object or the device including the element further includes another same element. In the application document of the present invention, if it is mentioned that an act is executed according to an element, it means that the act is executed according to at least that element, which includes two situations: the act is executed only according to that element, and the act is executed according to that element and other elements. The expression of "multiple" elements means including two or more elements.

All documents cited in the present application are hereby incorporated by reference as if each had been individually incorporated by reference. In addition, it should be understood that after reading the above teachings of the presents application, those skilled in the art can make various changes or modifications to the presents application, and these equivalent forms also fall into the protection scope claimed in the present application.

## Claims

1. An uplink control channel transmission method, comprising:
determining, by a terminal, a period and a physical resource for transmitting an uplink scheduling request;
determining, by the terminal, to use a target uplink control channel for transmitting other uplink control information; and
determining, by the terminal, a multiplexing transmission mode of the uplink scheduling request and the other uplink control information according to a relationship between the period and a transmission duration of the target uplink control channel.

2. The uplink control channel transmission method of claim 1, wherein determining, by the terminal, the multiplexing transmission mode of the uplink scheduling request and the other uplink control information according to the relationship between the period and the transmission duration of the target uplink control channel comprises:
determining, by the terminal, that a first preset relationship between the period and the transmission duration of the target uplink control channel is satisfied; and
determining, by the terminal, that the uplink scheduling request and the other uplink control information are transmitted by multiplexing through the target uplink control channel.

3. The uplink control channel transmission method of claim 2, wherein determining, by the terminal, that the uplink scheduling request and the other uplink control information are transmitted by multiplexing through the target uplink control channel comprises:
mapping a processed uplink scheduling request and the other uplink control information into the target uplink control channel for transmission after processing of the uplink scheduling request and the other uplink control information, wherein the processing comprises at least one of the following:
concatenation;
joint coding;
interleaving; and
modulation.

4. The uplink control channel transmission method of claim 2, wherein the first preset relationship comprises:
the transmission duration of the target uplink control channel is less than or equal to a product of K and the period of the uplink scheduling request, wherein K > 0; and/or
a size of a frequency domain resource of the target uplink control channel is less than a size of a frequency domain resource corresponding to the physical resource.

5. The uplink control channel transmission method of any one of claims 1-4, wherein determining, by the terminal, the multiplexing transmission mode of the uplink scheduling request and the other uplink control information according to the relationship between the period and the transmission duration of the target uplink control channel comprises:
determining, by the terminal, that a second preset relationship between the period and the transmission duration of the target uplink control channel is satisfied; and
determining, by the terminal, to use a first set of time symbols in the target uplink control channel for transmitting the other uplink control information.

6. The uplink control channel transmission method of claim 5, wherein the terminal transmits the uplink scheduling request on the physical resource; wherein
the first set of time domain symbols contains time domain symbols other than time domain symbols used for actually transmitting the uplink scheduling request in all time domain symbols in the target uplink control channel.

7. The uplink control channel transmission method of claim 5, wherein the terminal transmits the uplink scheduling request on the physical resource; wherein
the first set of time domain symbols contains time domain symbols other than time domain symbols overlapping with the physical resource in all time domain symbols in the target uplink control channel.

8. The uplink control channel transmission method of claim 5, wherein the terminal transmits the uplink scheduling request on a second set of time symbols in a frequency domain resource where the target uplink control channel is located, and the second set of time symbols are the same as time symbols occupied by the physical resource.

9. The uplink control channel transmission method of claim 8, wherein the first set of time domain symbols contains time domain symbols other than the second set of time symbols in all time domain symbols in the target uplink control channel.

10. The uplink control channel transmission method of claim 8, wherein the first set of time domain symbols contains time domain symbols other than time domain symbols overlapping with the physical resource in all time domain symbols in the target uplink control channel.

11. The uplink control channel transmission method of claim 5, wherein the second preset relationship comprises:
the transmission duration of the target uplink control channel is greater than a product of S and the period of the uplink scheduling request, wherein S > 0; and/or
a size of a frequency domain resource of the target uplink control channel is greater than or equal to a size of a frequency domain resource corresponding to the physical resource.

12. The uplink control channel transmission method of claim 5, wherein the other uplink control information is mapped to the first set of time symbols for transmission after a number matching is performed according to a number of the first set of time symbols; or
the other uplink control information is mapped to the first set of time symbols for transmission by puncturing.

13. An uplink control channel transmission method, comprising:
determining, by a base station, a period and a physical resource for receiving an uplink scheduling request;
determining, by the base station, to use a target uplink control channel for receiving other uplink control information; and
determining, by the base station, a multiplexing transmission mode of the uplink scheduling request and the other uplink control information according to a relationship between the period and a transmission duration of the target uplink control channel.

14. The uplink control channel transmission method of claim 13, wherein determining, by the base station, the multiplexing transmission mode of the uplink scheduling request and the other uplink control information according to the relationship between the period and the transmission duration of the target uplink control channel comprises:
determining, by the base station, that a first preset relationship between the period and the transmission duration of the target uplink control channel is satisfied; and
determining, by the base station, that the uplink scheduling request and the other uplink control information are transmitted by multiplexing through the target uplink control channel.

15. The uplink control channel transmission method of claim 14, wherein determining, by the base station, that the uplink scheduling request and the other uplink control information are transmitted by multiplexing through the target uplink control channel comprises:
performing a processing on a signal received from the target uplink control channel, wherein the processing comprises one of the following or any combination thereof:
de-concatenation, joint decoding, de-interleaving and demodulation.

16. The uplink control channel transmission method of claim 14, wherein the first preset relationship comprises:
the transmission duration of the target uplink control channel is less than or equal to a product of K and the period of the uplink scheduling request, wherein K > 0; and/or
a size of a frequency domain resource of the target uplink control channel is less than a size of a frequency domain resource corresponding to the physical resource.

17. The uplink control channel transmission method of any one of claims 13-16, wherein determining, by the base station, the multiplexing transmission mode of the uplink scheduling request and the other uplink control information according to the relationship between the period and the transmission duration of the target uplink control channel comprises:
determining, by the base station, that a second preset relationship between the period and the transmission duration of the target uplink control channel is satisfied; and
determining, by the base station, to use a first set of time symbols in the target uplink control channel for receiving the other uplink control information.

18. The uplink control channel transmission method of claim 17, wherein the base station receives the uplink scheduling request on the physical resource, and
the first set of time domain symbols contains time domain symbols other than time domain symbols used for actually transmitting the uplink scheduling request in all time domain symbols in the target uplink control channel.

19. The uplink control channel transmission method of claim 17, wherein the base station receives the uplink scheduling request on the physical resource, and
the first set of time domain symbols contains time domain symbols other than time domain symbols overlapping with the physical resource in all time domain symbols in the target uplink control channel.

20. The uplink control channel transmission method of claim 17, wherein the base station receives the uplink scheduling request on a second set of time symbols in a frequency domain resource where the target uplink control channel is located, and the second set of time symbols are the same as time symbols occupied by the physical resource.

21. The uplink control channel transmission method of claim 18, wherein the first set of time domain symbols contains time domain symbols other than the second set of time symbols in all time domain symbols in the target uplink control channel, or
the first set of time domain symbols contains time domain symbols other than time domain symbols overlapping with the physical resource in all time domain symbols in the target uplink control channel.

22. The uplink control channel transmission method of claim 17, wherein the second preset relationship comprises:
the transmission duration of the target uplink control channel is greater than a product of S and the period of the uplink scheduling request, wherein S > 0; and/or
a size of a frequency domain resource of the target uplink control channel is greater than or equal to a size of a frequency domain resource corresponding to the physical resource.

23. The uplink control channel transmission method of claim 17, wherein the other uplink control information is mapped to the first set of time symbols for transmission after a number matching is performed according to a number of the first set of time symbols; or
the other uplink control information is mapped to the first set of time symbols for transmission by puncturing.

24. A terminal, comprising:
a first module, configured to determine a period and a physical resource for transmitting an uplink scheduling request;
a second module, configured to determine to use a target uplink control channel for transmitting other uplink control information; and
a third module, configured to determine a multiplexing transmission mode of the uplink scheduling request and the other uplink control information according to a relationship between the period and a transmission duration of the target uplink control channel.

25. The terminal of claim 24, wherein the third module comprises:
a first sub-module, configured to determine that a first preset relationship between the period and the transmission duration of the target uplink control channel is satisfied; and
a second sub-module, configured to determine that the uplink scheduling request and the other uplink control information are transmitted by multiplexing through the target uplink control channel;
wherein the first preset relationship comprises:
the transmission duration of the target uplink control channel is less than or equal to a product of K and the period of the uplink scheduling request, wherein K > 0; and/or
a size of a frequency domain resource of the target uplink control channel is less than a size of a frequency domain resource corresponding to the physical resource.

26. The terminal of claim 24, wherein the third module comprises:
a third sub-module, configured to determine that a second preset relationship between the period and the transmission duration of the target uplink control channel is satisfied; and
a fourth sub-module, configured to determine to use a first set of time symbols in the target uplink control channel for transmitting the other uplink control information;
wherein the second preset relationship comprises:
the transmission duration of the target uplink control channel is greater than a product of S and the period of the uplink scheduling request, wherein S > 0; and/or
a size of a frequency domain resource of the target uplink control channel is greater than or equal to a size of a frequency domain resource corresponding to the physical resource.

27. The terminal of claim 26, wherein the terminal transmits the uplink scheduling request on the physical resource, and the first set of time domain symbols contains time domain symbols other than time domain symbols used for actually transmitting the uplink scheduling request in all time domain symbols in the target uplink control channel; or
the terminal transmits the uplink scheduling request on the physical resource, and the first set of time domain symbols contains time domain symbols other than time domain symbols overlapping with the physical resource in all time domain symbols in the target uplink control channel; or
the terminal transmits the uplink scheduling request on a second set of time symbols in a frequency domain resource where the target uplink control channel is located, and the second set of time symbols are the same as time symbols occupied by the physical resource.

28. A base station , comprising:
a fourth module, configured to determine a period and a physical resource for receiving an uplink scheduling request;
a fifth module, configured to determine to use a target uplink control channel for receiving other uplink control information; and
a sixth module, configured to determine a multiplexing transmission mode of the uplink scheduling request and the other uplink control information according to a relationship between the period and a transmission duration of the target uplink control channel.

29. The base station of claim 28, wherein the sixth module comprises:
a fifth sub-module, configured to determine that a first preset relationship between the period and the transmission duration of the target uplink control channel is satisfied; and
a sixth sub-module, configured to determine that the uplink scheduling request and the other uplink control information are transmitted by multiplexing through the target uplink control channel;
wherein the first preset relationship comprises:
the transmission duration of the target uplink control channel is less than or equal to a product of K and the period of the uplink scheduling request, wherein K > 0; and/or
a size of a frequency domain resource of the target uplink control channel is less than a size of a frequency domain resource corresponding to the physical resource.

30. The base station of claim 28, wherein the sixth module comprises:
a seventh sub-module, configured to determine that a second preset relationship between the period and the transmission duration of the target uplink control channel is satisfied; and
an eighth sub-module, configured to determine to use a first set of time symbols in the target uplink control channel for receiving the other uplink control information;
wherein the second preset relationship comprises:
the transmission duration of the target uplink control channel is greater than a product of S and the period of the uplink scheduling request, wherein S > 0; and/or
a size of a frequency domain resource of the target uplink control channel is greater than or equal to a size of a frequency domain resource corresponding to the physical resource.

31. The base station of claim 28, wherein the base station receives the uplink scheduling request on the physical resource, and the first set of time domain symbols contains time domain symbols other than time domain symbols used for actually transmitting the uplink scheduling request in all time domain symbols in the target uplink control channel; or
the base station receives the uplink scheduling request on the physical resource, and the first set of time domain symbols contains time domain symbols other than time domain symbols overlapping with the physical resource in all time domain symbols in the target uplink control channel; or
the base station receives the uplink scheduling request on a second set of time symbols in a frequency domain resource where the target uplink control channel is located, and the second set of time symbols are the same as time symbols occupied by the physical resource.
